# EUROPEAN PATENT APPLICATION

(11) **EP 3 002 555 A1**
(43) Date of publication of application: **06.04.2016**
(21) Application number: 15153325.4
(22) Date of filing: 30.01.2015
(51) Int. Cl.: G01C 21/20

(54) **Mobile navigation system, method and device**

(30) Priority: 03.10.2014 TW 103134589
(71) Applicant: Institute for Information Industry, Taipei 106 (TW)
(72) Inventor: Liu, Chi-Hsien, Changhua County 510 (TW); Huang, Chien-Wen, Taipei City 111 (TW); Chen, Li-Ting, Taipei City 114 (TW); Ho, Pao-Chung, Taipei City 116 (TW)
(74) Representative: Nederlandsch Octrooibureau

(57) **Abstract**

A mobile navigation system includes positioning devices and a positioning datasheet generating unit. The positioning devices are installed in multiple areas and transmit wireless signals containing positioning device serial numbers. The positioning datasheet generating unit provides an electronic region map and a positioning datasheet to a mobile device. The positioning datasheet includes location information of the areas, the associated positioning device serial numbers, and navigation routes between any two of the areas. The mobile device searches the positioning datasheet to obtain the location information of a current area of itself with the positioning device serial number in the wireless signal received from the positioning device. The mobile device displays the current area on the electronic region map. Upon receiving a destination area, the mobile device searches the positioning datasheet to find a navigation route between the current area and the destination area and displays the navigation route.

## Description

### BACKGROUND

### Field of Invention

The present disclosure relates to navigation system, method and device. More particularly, the present disclosure relates to mobile navigation system, method and device.

### Description of Related Art

In the field of navigation, GPS technology is mature with decades of development. However, it has its limitation in some environments, such as basements and indoor environments. Various positioning and navigation technologies for indoor application have emerged in the market to fulfill this need.

There are five major types of indoor positioning technologies, including RFID, WiFi, Bluetooth, ZigBee, and Infrared. However, user devices are required to scan beacons in the surrounding environments continuously and perform computation iteratively to obtain satisfactory positioning results (such as triangulation). During navigation, the user device calculates routes from current position to a destination position in real-time, and recalculates immediately when the user device detects that the user has gone off the route.

However, the computation for generating positioning results and calculating routes in real-time drains power of the user devices quickly. As the user devices (e.g., smart phones and tablets) become indispensable for the daily life, short battery life causes great inconvenience.

Moreover, the user devices have limited computing resources compared to desktop computers, and an efficient recalculation of new routes cannot be guaranteed when the user devices are performing other tasks. Therefore, the usability of navigation services is undermined, and users cannot enjoy a smooth navigation experience.

### SUMMARY

An aspect of the present disclosure is directed to a mobile navigation system. The mobile navigation system includes multiple positioning devices and a positioning datasheet generating unit. The positioning devices are installed in multiple areas and transmit wireless signals containing positioning device serial numbers. The positioning datasheet generating unit is configured for providing an electronic region map and a positioning datasheet to a mobile device. The positioning datasheet includes location information of the areas, the positioning device serial numbers associated with the areas, and navigation routes between any two of the areas. The mobile device is configured for obtaining the location information of a current area in which the mobile device is located by searching the positioning datasheet with the positioning device serial number in the wireless signal received from the positioning device. The mobile device is also configured for displaying the current area on the electronic region map. Upon receiving a destination area, the mobile device is configured for searching the positioning datasheet to find a navigation route between the current area and the destination area and displaying the navigation route to provide navigation guidance.

Another aspect of the present disclosure is directed to a mobile navigation method. The mobile navigation method includes the following operations: transmitting wireless signals including positioning device serial numbers from multiple positioning devices installed in multiple areas, and providing an electronic region map and a positioning datasheet to a mobile device. The positioning device serial numbers are respectively associated with the positioning devices. The positioning datasheet includes location information of the areas, the positioning device serial number respectively associated with the areas, and navigation routes between any two of the areas, such that a mobile device is configured for searching the positioning datasheet to obtain the location information associated with the positioning device serial number in the wireless signal when the mobile device receives the wireless signal. Navigation guidance is provided with the navigation route and the electronic region map.

Yet another aspect of the present disclosure is directed to a mobile device for navigation. The mobile device includes a storage unit, an input unit, a wireless communication unit, a processing unit, and a display unit. The storage unit is configured for storing an electronic region map and a positioning datasheet. The positioning datasheet includes location information of areas, the positioning device serial numbers respectively associated with the areas, and navigation routes between any two of the areas. The input unit is configured for receiving a destination area. The wireless communication unit is configured for receiving a wireless signal from a positioning device, and the wireless signal includes a positioning device serial number. The processing unit is configured for searching the positioning datasheet to obtain the location information of the area associated with the positioning device serial number in the wireless signal, and set the location information of the area as the current area. The processing unit is also configured for searching the positioning datasheet for one of the navigation routes from the current area to the destination area. The display unit displays the navigation route from the current area to the destination area on the electronic region map.

It is to be understood that both the foregoing general description and the following detailed description are by examples, and are intended to provide further explanation of the present disclosure as claimed.

### BRIEF DESCRIPTION OF THE DRAWINGS

The present disclosure can be more fully understood by reading the following detailed description of the embodiment, with reference made to the accompanying drawings as follows:
Fig. 1 is a schematic diagram of a mobile navigation system according to a first embodiment of the present disclosure;
Fig. 2 is an example display of an electronic region map according to a second embodiment of the present disclosure; and
Fig. 3 is a flow chart of a mobile navigation method according to a third embodiment of the present disclosure.

### DETAILED DESCRIPTION

Reference will now be made in detail to the present embodiments of the disclosure, examples of which are illustrated in the accompanying drawings. Wherever possible, the same reference numbers are used in the drawings and the description to refer to the same or like parts.

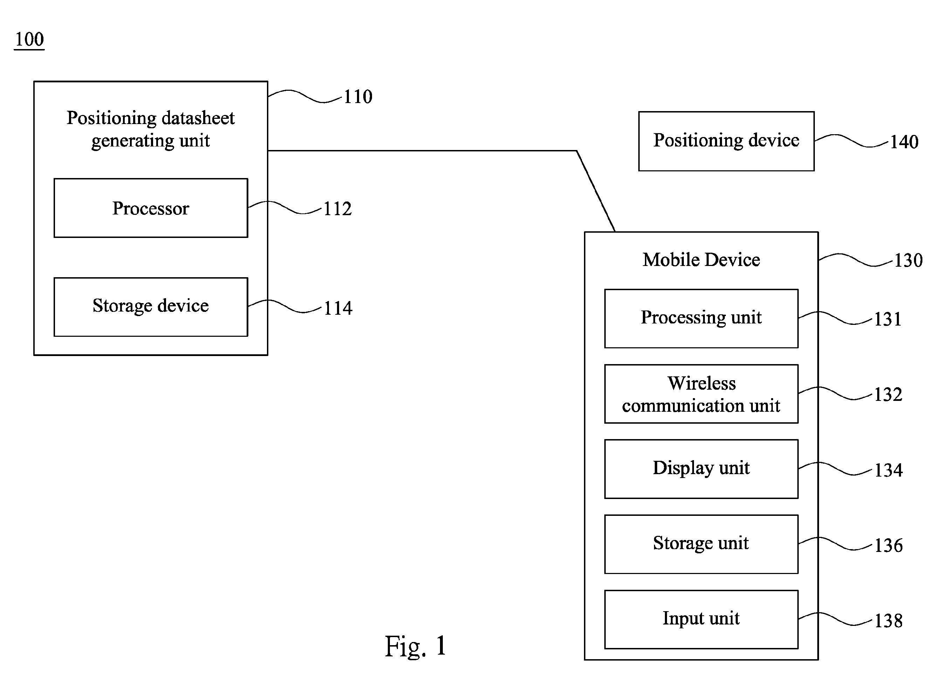

Fig. 1 is a schematic diagram of a mobile navigation system according to a first embodiment of the present disclosure. In order to provide a positioning and navigation service with high efficiency and low energy consumption, a mobile navigation system 100 includes a positioning datasheet generating unit 110 and multiple positioning devices 140 (only one positioning device is illustrated to represent multiple identical positioning devices.) The positioning devices 140 are installed in multiple areas in a region. The positioning datasheet generating unit 110 is configured for managing and recording location information of the areas in which the positioning devices 140 are installed, and other information related to positioning and navigation. In the following description, the positioning device 140 is the general term for referring to all positioning devices in the mobile navigation system 100. When it is necessary to describe the interoperation between the mobile device 130 and the individual positioning device 140, an English letter is suffixed (e.g., A or B) to represent different positioning devices 140.

The positioning datasheet generating unit 110 includes a processor 112, e.g., a central processing unit, and a storage device 114, e.g., a hard disk or a flash memory. In one embodiment, the positioning datasheet generating unit 110 is a personal computer. In another embodiment, the positioning datasheet generating unit 110 is a cloud server serving as a cloud management platform. In yet another embodiment, the positioning datasheet generating unit 110 is a workstation.

When a user is in the region with the mobile navigation system 100, the user operates a mobile device 130 to communicate with the positioning devices 140 nearby his/her location. To provide positioning and navigation services to the user, the mobile device 130 is configured for searching the data provided by the positioning datasheet generating unit 110 instead of performing real-time computation. Moreover, the mobile device 130 requires a connection with the positioning datasheet generating unit 110 for downloading the data, but provides the positioning and navigation service in both offline mode and online mode. The number of the positioning devices 140 shown in Fig. 1 is only by example, and should not be used to limit the present disclosure. The following description gives details of the interoperation between all elements.

The mobile device 130 includes a processing unit 131, a wireless communication unit 132, a display unit 134, a storage unit 136, and an input unit 138. The processing unit 131 is a microprocessor with ARM architecture or MIPS architecture. The wireless communication unit 132 is a wireless communication chip compatible with the positioning device 140. For example, the wireless communication unit 132 is a Bluetooth or WiFi communication chip. The display unit 134 is an LCD panel or an OLED panel configured for providing a user interface and displaying relevant information to provide the positioning and navigation service. The storage unit 136 is an SD card or a flash memory, configured for storing the data provided by the positioning datasheet generating unit 110. The input unit 138 is a keyboard, or a touchscreen combined with the display unit 134. In one embodiment, the mobile device 130 is a smart phone. In another embodiment, the mobile device 130 is a tablet.

The positioning devices 140 of the mobile navigation system 100 are installed multiple areas in a region, e.g., an exhibition venue, a shopping mall, a parking lot, or a business building. When the mobile navigation system 100 is built in an exhibition venue, the positioning devices 140 are installed in every stall of the exhibition. When the mobile navigation system 100 is built in a business building, the positioning devices 140 are installed in every office and conference room.

The positioning devices 140 are active devices of transmitting signals, and thus the mobile device 130 is not required to continuously scan for the presence of the positioning devices 140. Illustratively, the energy consumption of the mobile device 130 is reduced. The wireless signals transmitted by the positioning devices 140 include the positioning device serial numbers, and the positioning device serial numbers associated with different positioning devices are unique for identification. Moreover, coverage of the positioning device 140 includes the area installed with the positioning device 140.

In practice, the positioning devices 140 can be signal transmitters with different communication technologies. In one embodiment, the positioning devices 140 are Bluetooth low energy devices, providing advantages of energy efficiency and large coverage with communication rage up to 100 meters. Therefore, the size of the areas in which the positioning devices 140 are installed is 10 meters, 15 meters, or 20 meters. In other words, the areas are required to be covered in the communication range but adjustable according to the practical needs of each application scenario. The sizes of the areas for each positioning device 140 are not required to be identical. The numbers are by example and should not be used to limit the scope of the present disclosure.

With the positioning devices 140 installed in place, the positioning datasheet generating unit 110 provides a user interface for a system administrator to enter an electronic region map of the region including all the areas with the positioning devices 140, and stores the electronic region map in the storage device 114. The system administrator also enters positioning device serial numbers associated with the positioning devices 140 and location information of the areas associated with the positioning devices 140 through the user interface.

After all the aforesaid data has been entered into the positioning datasheet generating unit 110 by the system administrator, the processor 112 of the positioning datasheet generating unit 110 computes navigation routes between any two of the areas according to the electronic region map. The positioning datasheet generating unit 110 compiles the location information of the areas associated with the positioning devices 140, the positioning device serial numbers associated with the areas, and the navigation routes between any two of the areas in a single file to generate a positioning datasheet. The positioning datasheet generating unit 110 stores the positioning datasheet in the storage device 114 and sends the electronic region map and the positioning datasheet to the mobile device 130.

In the present disclosure, the algorithm for calculating navigation routes is Dijkstra's algorithm or A* algorithm. Those skilled in the art can choose other suitable routing algorithm, and the scope of the disclosure is not limited hereto. In one embodiment, the positioning datasheet generating unit 110 sends the electronic region map as a scalable vector graph and the positioning datasheet as a SQLite file to reduce the file size.

The mobile device 130 is configured for storing the electronic region map and the positioning datasheet received from the positioning datasheet generating unit 110 in the storage unit 136. When a user carrying the mobile device 130 is in the region associated with the electronic region map, the wireless communication unit 132 is configured for receiving a wireless signal from the positioning device 140. The processing unit 131 is configured for searching the positioning datasheet with the positioning device serial number contained in the wireless signal, and obtaining the location information of the area associated with the positioning device serial number received by the mobile device 130 as the current area of the mobile device 130. Furthermore, the mobile device 130 is configured for displaying the electronic region map and the current area on the display unit 134.

The user selects one of the areas installed with the positioning devices 140 with a selection signal, and the selected area is a destination area. In practice, the user browses the electronic region map displayed on the display unit 134 and generates a selection signal for selecting one of the areas as the destination area with the input unit 138 from the electronic region map displayed. The processing unit 131 searches the positioning datasheet for the navigation route from the current area to the destination area selected by the user, and displays the navigation route with the display unit 134 to provide navigation guidance.

It is worth noting that the mobile navigation system 100 is a scalable system. After the positioning datasheet is generated, the mobile navigation system 100 offers great flexibility in adding or removing the positioning devices 140 installed in the region according to practical need. The system administrator enters the location information of the area associated with the positioning devices 140 newly installed in the region together with the positioning device serial number in the positioning datasheet generating unit 110. The electronic region map and the positioning datasheet are updated to include the change.

The mobile device 130 sends a data transferring request to the positioning datasheet generating unit 110, and the data transferring request includes version information of the electronic region map and the positioning datasheet stored in the mobile device 130. The version information is a version number or a build date. The positioning datasheet generating unit 110 updates the electronic region map and the positioning datasheet on the mobile device 130 with the up-to-date version on the positioning datasheet generating unit 110 when the version information in the data transferring request is not associated with a current version.

In the foregoing descriptions, the positioning datasheet generating unit 110 can generate a difference positioning datasheet including the difference between the current version and the previous version instead of a full positioning datasheet including the updated information. When the positioning datasheet generating unit 110 receives the data transferring request from the mobile device 130, it sends the difference positioning datasheet and the updated electronic region map. The mobile device 130 searches the difference positioning datasheet before searching the positioning datasheet, so as to display the most updated data. Illustratively, the positioning datasheet generating unit 110 saves the processing time and resources for generating new positioning datasheet, and the data size transmitted between the positioning datasheet generating unit 110 and the mobile device 130 is reduced.

In one embodiment, the mobile device 130 sends the data transferring request periodically to obtain the current version of the electronic region map and the positioning datasheet. In another embodiment, the mobile device 130 sends the data transferring request when the user selects the destination area to request navigation guidance. The timing of sending data transferring request is determined according to practical needs, and not limited to the examples listed here.

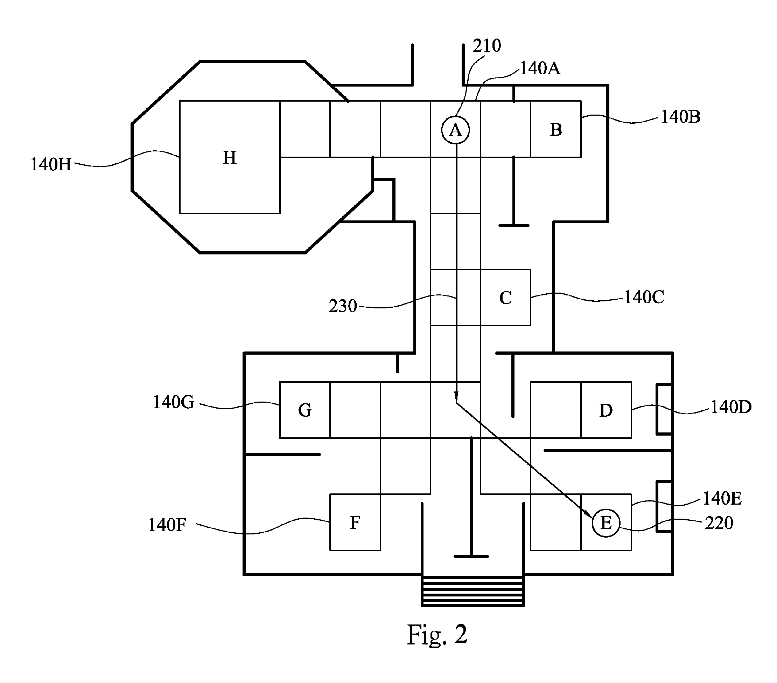

Fig. 2 is an example display of an electronic region map according to a second embodiment of the present disclosure for illustrating how the electronic region map is rendered on the mobile device 130. For clarity and ease of understanding, the following descriptions for Fig. 2 take the mobile navigation system 100 as an example, but the disclosure is not limited thereto.

In the present embodiment, the mobile navigation system 100 is applied in an exhibition venue, and the positioning datasheet generating unit 110 is a cloud management platform. The positioning datasheet generating unit 110 is configured for partitioning the electronic region map into multiple positioning grids and routing grids. The positioning grids are labeled with A-H and respectively associated with the areas installed with the positioning devices 140A-140H. The routing grids are utilized in the navigation routes and associated with space accessible, such as the hall. The positioning datasheet generating unit 110 utilizes the positioning grids and the routing grids to calculate the navigation routes between any two of the areas. In other words, each navigation route is composed of some of the positioning grids and the routing grids.

The positioning grids labeled with letters A-H in Fig. 2 are respectively associated with the areas installed with the positioning devices 140A-140H ((not shown in the figure). The grids without labels are the routing grids. In the present embodiment, the mobile device 130 is configured for receiving the wireless signal transmitted by the positioning device 140A with the wireless communication unit 132. The processing unit 131 is configured for searching the positioning datasheet stored in the storage unit 136 with the positioning device serial number contained in the wireless signal, and obtaining the location information of the area associated with the positioning device serial number. The location information of the area associated with the positioning device serial number indicates that the area associated with the positioning grid A is the current area of the mobile device 130. The mobile device 130 is configured for highlighting the current area of the mobile device 130 with a visual feature when displaying the electronic region map on the display unit 134, and the current area is represented with a circle in the present embodiment.

When the user intends to obtain navigation guidance, he/she browses the electronic region map displayed with the display unit 134. The mobile device 130 is configured for receiving a selection signal for selecting a destination area with the input unit 138 operated by the user. To be more specific, the user selects one of the positioning grids with the input unit 138, and the selected positioning grid 220 is associated with the destination area. The positioning grid E is associated with the destination area in this example. The mobile device 130 is configured for searching the positioning datasheet with the processing unit 131, and obtaining the navigation route from the area associated with the positioning grid A to the area associated with the positioning grid E. The navigation route is represented with an arrow in Fig. 2, and the positioning grids and routing grids crossed by the arrow form the navigation route 230. In addition, the positioning grid associated with the destination area is also represented with a circle in the example. In the present embodiment, symbol is adopted as the visual feature for highlighting the current area and the navigation route for providing navigation guidance. In another embodiment, color is used as the visual feature for highlighting the positioning grid 210 associated with the current area, the positioning grid 220 associated with the destination area, and the navigation route 230.

The navigation route 230 is obtained by searching the positioning datasheet instead of performing complex computation. Therefore, the user obtains the navigation route 230 with high efficiency and low energy consumption for the mobile device 130. In another embodiment, the user can select any one of the areas associated with the positioning grids B-H as the destination area.

The mobile device 130 is configured for displaying the navigation route 230 on the electronic region map with the arrow from the positioning grid A to the positioning grid E to provide navigation guidance. In one embodiment, the user carries the mobile device 130 and approaches the destination area 220 associated with the positioning grid E by following the direction of the navigation route 230. When the mobile device 130 leaves the area associated with the positioning grid A, the positioning device serial number in the wireless signal received by the mobile device 130 changes to the positioning device serial number associated with the positioning device 140C. The mobile device 130 is configured for searching the positioning datasheet to obtain the location information of the current area in which the mobile device 130 is. In this example, the current area is the area associated with the positioning device 140C. The mobile device 130 is configured for updating the location information of the current area with the location information of the area associated with the positioning device 140C.

In another embodiment, the user goes in the wrong direction toward the area associated with the positioning grid B despite that the navigation route 230 is displayed on the display unit 134 of the mobile device 130 to provide navigation guidance to the area associated with the positioning gird E. The user carrying the mobile device 130 enters in the area associated with the positioning grid B, and thus the wireless communication unit 132 receives the wireless signal from the positioning device 140B. The mobile device 130 obtains the location information of the area associated with the positioning device 140B as the current area by searching the positioning datasheet with the positioning device serial number in the wireless signal from the positioning device 140B. The mobile device 130 is configured for displaying the positioning grid B associated with the current area in the electronic region map, and an off route behavior of deviating from the navigation route 230 is detected by the mobile device 130. The mobile device 130 is configured for searching for the positioning datasheet to get a new navigation route from the current area, the area associated with the positioning grid B, to the area associated with the positioning grid E and updating the navigation route 230 shown in the electronic region map.

In a conventional positioning and navigation system, recalculation procedure described in the previous paragraph is time consuming and causes time delay for obtaining updated navigation route. The mobile navigation system 100 in the present disclosure enables a smooth navigation service by providing updated navigation routes in real-time without complex computation on the mobile device 130 for calculating the navigation route.

In one embodiment, the positioning datasheet further includes an effective radius associated with each of the positioning device serial number associated with the positioning devices 140, and the value of the effective radiuses are determined according to the areas associated with the positioning devices 140A-140H. In the present embodiment, the positioning grid H is associated with the area of a lecturing hall, and the rest of the positioning grids A-G are associated with the areas of meeting rooms and service desks. Therefore, the positioning grid H is associated with a larger area, and thus a larger effective radius. For example, the effective radius associated with the positioning device serial number associated with the positioning device 140H is 15 meters, and the effective radiuses associated with the positioning device serial numbers associated with the positioning devices 140A-140G are 5 meters.

The effective radiuses are related to positioning accuracy. In common application scenarios, the information of the meeting room or exhibition stall that the user is currently in or at is sufficient, and the positioning accuracy to centimeter is not required for most application scenarios. Therefore, the mobile navigation system 100 adopts the concept of micro-location instead of accurate positioning with triangulation or positioning with the RSSI (Received Signal Strength Index) patterns of the positioning devices 140 acquired with machine learning. As a result, a positioning and navigation service with high efficiency and low energy consumption is provided.

In one embodiment, the mobile navigation device 130 is configured to receive the wireless signal from the positioning device 140A, determine the distance to the positioning device 140A with the RSSI, and search the positioning datasheet for the effective radius associated with the positioning device serial number associated with the positioning device 140A. When the distance is smaller than the effective radius, the current area of the mobile device 130 is set as the location information of the area associated with the positioning device serial number contained in the wireless signal transmitted by the positioning device 140A.

In another embodiment, the mobile device 130 is configured to receive the wireless signals from the positioning device 140A and the positioning device 140H, determine the distances to the positioning device 140A and the positioning device 140H, and compare the distances with the effective radiuses associated with the positioning device 140A and the positioning device 140H respectively. The comparison tells that the distance to the positioning device 140A is smaller than the effective radius associated with the positioning device serial number associated with the positioning device 140A, and the distance to the positioning device 140H is larger than the effective radius associated with the positioning device serial number associated with the positioning device 140H. Therefore, the area associated with the positioning grid A is set as the current area of the mobile device 130.

In the previous embodiment, the mobile device 130 is configured to set location information of the area associated with the positioning device 140 transmitting the wireless signal with the strongest signal strength as the current area of the mobile device 130 when no effective radius is included in the positioning datasheet.

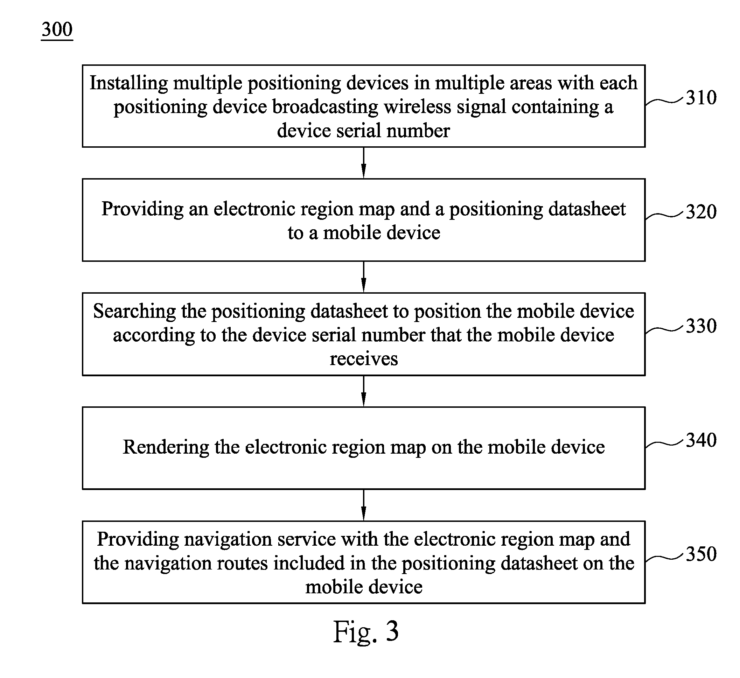

Fig. 3 is a flow chart of a mobile navigation method according to a third embodiment of the present disclosure. For clarity and ease of understanding, the following description for Fig. 3 takes the navigation system 100 shown in Fig. 1 as an example, but the disclosure is not limited hereto. While the process flow described below includes a number of operations that appear to be in a specific order, it should be apparent that these operations may include more or fewer operations, which may be executed serially or in parallel (e.g., using parallel processors or in a multi-threading environment).

The mobile navigation method 300 includes the following operations. Multiple positioning devices 140 are installed in multiple areas. The positioning devices transmit wireless signals including positioning device serial numbers (310). The wireless signals transmitted by the positioning devices 140 are Bluetooth 4.0 signals or ZigBee signals, but not limited hereto.

The information about the region for which the positioning and navigation service is provided is entered in the positioning datasheet generating unit 110. Moreover, the location information of the areas where the positioning devices 140 are installed is entered as well. The positioning datasheet generating unit 110 provides an electronic region map of the region and a positioning datasheet to a mobile device 130 (320). The electronic region map is compiled according to the information of the region, and the positioning datasheet contains the location information of the areas in which the positioning devices 140 are installed and navigation routes between any two of the areas. The details of generating the electronic region map and the positioning datasheet by the positioning datasheet generating unit 110 is described in the text accompanying Fig. 1, and not repeated herein.

The user carrying the mobile device 130 with the electronic region map and the positioning datasheet enters the region, and operates the mobile device 130 to obtain location information of a current area that he/she is in. The mobile device 130 is configured for receiving wireless signal from the positioning device 140 installed in the areas in the region, reading the positioning device serial number in the wireless signal, and searching the positioning datasheet for the location information of the current area (330). The details of searching the positioning datasheet to obtain the location information of the current area is described in the previous paragraphs, and not repeated herein.

After the location information of the current area is obtained, the mobile device 130 is configured for displaying the electronic region map with a visual feature highlighting the current area of the mobile device 130 (340). The other areas in which the rest of the positioning devices 140 are installed are displayed for the user to input a selection signal to select one of the other areas as a destination area.

The user operates the mobile device 130 to select one of the other areas associated with the other positioning devices 140 as the destination area, and the mobile device 130 is configured for searching the positioning datasheet for one of the navigation routes to be displayed on the electronic region map, so as to provide navigation guidance (350). In the mobile navigation method 300, the navigation guidance is provided by searching the positioning datasheet generated in advance by the positioning datasheet generating unit 110, and no complex computation on the mobile device 130 is required. The location information of the current area of the mobile device 130 is updated during the navigation service to determine whether the user has gone off route and whether searching the positioning datasheet for a new navigation route is required. The details are described in the accompanying text of Fig. 2, and not repeated herein.

The present disclosure provides the mobile navigation system 100 and the mobile navigation method 300, in which a positioning datasheet is generated in advance by a positioning datasheet generating unit 110. The complex and expensive computation involved in a conventional positioning and navigation system is avoided, and a positioning and navigation service with high efficiency and low energy consumption is provided. The battery of the mobile device 130 for navigation is increased to improve the convenience. For the administrator who intends to install multiple positioning devices in multiple areas in a region to provide a positioning and navigation service, the disclosure offers a solution with scalability and flexibility by allowing the administrator to customize the effective radiuses associated with the positioning device 140 and add/remove the positioning devices after the mobile navigation system 100 is set up. Moreover, the disclosure offers a cost-effective solution since single positioning device 140 is required for each area.

## Claims

1. A mobile navigation system (100), **characterized by** comprising:
a plurality of positioning devices (140, 140A-140H) installed in a plurality of areas respectively, wherein each of the positioning devices (140, 140A-140H) is configured for transmitting a wireless signal comprising a positioning device serial number;
a positioning datasheet generating unit (110) configured for providing an electronic region map and a positioning datasheet to a mobile device (130), wherein the positioning datasheet comprises location information of the areas, the positioning device serial numbers associated with the areas, and navigation routes (230) between any two of the areas, and the mobile device (130) is configured for searching the positioning datasheet to obtain the location information associated with the positioning device serial number contained in the wireless signal received by the mobile device (130) and providing a navigation service with the navigation routes (230) and the electronic region map.

2. The mobile navigation system (100) of claim 1, **characterized in that** the positioning datasheet generating unit (110) is configured for partitioning the electronic region map into a plurality of positioning grids (A-H) associated with the areas and a plurality of routing grids associated with the navigation routes (230).

3. The mobile navigation system (100) of any of claims 1-2, **characterized in that** the positioning datasheet comprises effective radiuses associated with the positioning device serial numbers, respectively and the mobile device (130) is configured for determining a distance between the mobile device (130) and the positioning device (140, 140A-140H) according to strength of the wireless signal of the positioning device (140, 140A-140H), and obtaining the location information associated with the positioning device serial number of the positioning device (140, 140A-140H) when the distance is smaller than the effective radius associated with the positioning device serial number.

4. The mobile navigation system (100) of any of claims 1-3, **characterized in that** the positioning datasheet generating unit (110) is configured for receiving a data transferring request comprising a version information of the electronic region map and the positioning datasheet, and the positioning datasheet generating unit (110) updates the electronic region map and the positioning datasheet on the mobile device (130) when determining that the version information is not associated with a current version.

5. The mobile navigation system (100) of any of claims 1-4, **characterized in that** the mobile device (130) is configured for displaying the electronic region map with the location information associated with a current area of the mobile device (130), receiving a selection signal for selecting one of the areas as a destination area (220), and searching the positioning datasheet to provide the navigation service with one of the navigation routes (230) between the current area (210) of the mobile device and the destination area (220).

6. A mobile navigation method (300), **characterized by** comprising:
transmitting wireless signals from a plurality of positioning devices (140, 140A-140H), wherein the wireless signals comprise positioning device serial numbers associated with the positioning devices (140, 140A-140H) and the positioning devices (140, 140A-140H) are installed in a plurality of areas, respectively;
providing an electronic region map and a positioning datasheet to a mobile device (130), wherein the positioning datasheet comprises location information of the areas, the positioning device serial numbers associated with the areas, and navigation routes (230) between any two of the areas, such that the mobile device (130) searches the positioning datasheet to obtain the location information associated with the positioning device serial number in the wireless signal when the mobile device (130) receives the wireless signal and further provide a navigation service with the navigation routes (230) and the electronic region map.

7. The mobile navigation method (300) of claim 6, **characterized by** further comprising:
partitioning the electronic region map into a plurality of grids comprising a plurality of positioning grids (A-H) associated with the areas and a plurality of routing grids associated with the navigation routes (230).

8. The mobile navigation method (300) of any of claims 5-6, **characterized by** further comprising:
configuring the mobile device (130) for determining a distance between the mobile device (130) and the positioning device (140, 140A-140H) according to strength of the wireless signal of the positioning device (140, 140A-140H) and obtaining the location information associated with the positioning device serial number when the distance is smaller than an effective radius associated with the positioning device serial number, wherein the positioning datasheet comprises the effective radius associated with each of the positioning device serial numbers.

9. The mobile navigation method (300) of any of claims 6-8, **characterized by** further comprising:
receiving a data transferring request comprising a version information of the electronic region map and the positioning datasheet, and updating the electronic region map and the positioning datasheet on the mobile device (130) when the version information is not associated with a current version.

10. The mobile navigation method (300) of any of claims 6-9, **characterized by** further comprising:
configuring the mobile device (130) for displaying the electronic region map and the location information associated with a current area (210) of the mobile device (130), configuring the mobile device (130) for receiving a selection signal for selecting one of the areas as a destination area (220), and configuring the mobile device (130) for searching the positioning datasheet to provide navigation service with one of the navigation routes (230) between the current area (210) of the mobile device (130) and the destination area (220).

11. A mobile device (130) for navigation, **characterized by** comprising:
a storage unit (136) configured for storing an electronic region map and a positioning datasheet, wherein the positioning datasheet comprises location information of a plurality of areas, the positioning device serial numbers associated with the areas, and navigation routes (230) between any two of the areas;
an input unit (138) configured for receiving a destination area (220);
a wireless communication unit (132) configured for receiving a wireless signal from a positioning device (140, 140A-140H), wherein the wireless signal comprises one of the positioning device serial numbers;
a processing unit (131) configured for searching the positioning datasheet to obtain the location information associated with the positioning device serial number contained in the wireless signal, setting the location information associated with the positioning device serial number contained in the wireless signal as a current area (210), and searching the positioning datasheet for one of the navigation routes (230) from the current area (210) to the destination area (220); and
a display unit (134) configured for displaying the navigation route (230) from the current area (210) to the destination area (220) on the electronic region map.

12. The mobile device (130) of claim 11, **characterized in that** the electronic region map comprises a plurality of positioning grids (A-H) associated with the areas and routing grids associated with the navigation routes (230).

13. The mobile device (130) of any of claims 11-12, **characterized in that** the positioning datasheet comprises effective radiuses respectively associated with the positioning device serial numbers, the wireless communication unit (132) is configured for determining a distance between the mobile device (130) and the positioning device (140, 140A-140H) according to strength of the wireless signal of the positioning device (140, 140A-140H), and the processing unit (131) is configured for obtaining the location information associated with the positioning device serial number when the distance is smaller than the effective radius associated with the positioning device serial number.

14. The mobile device (130)of any of claims 11-13, **characterized in that** the processing unit (131) is configured for sending a data transferring request comprising a version information of the electronic region map and the positioning datasheet, and the electronic region map and the positioning datasheet are updated when the version information is not associated with a current version.

15. The mobile device (130) of any of claims 11-14, **characterized in that** the processing unit (131) is configured for searching the positioning datasheet to update the location information of the current area (210) when the device serial number contained in the wireless signal received by the wireless communication unit (132) changes.
